# EUROPÄISCHE PATENTANMELDUNG

(11) **EP 1 133 924 A1**
(43) Veröffentlichungstag der Anmeldung: **19.09.2001**
(21) Anmeldenummer: 01101039.4
(22) Anmeldetag: 18.01.2001
(51) Int. Cl.: A23G 3/00, A23L 1/308, A23L 1/302

(54) **Weiches Fruchtbonbon**

(30) Priorität: 16.03.2000 DE 10012978
(71) Anmelder: Seitenbacher GmbH & Co., Naturkost, 74722 Buchen (DE)
(72) Erfinder: Pfannenschwarz, Willi, 74722 Buchen (DE)
(74) Vertreter: Lasch, Hartmut Dipl.-Ing.

(57) **Zusammenfassung**

Ein weiches Fruchtbonbon besteht aus Fruchtanteilen, Zukker, Geliermittel, Säuerungsmittel und Aromen und zeichnet sich dadurch aus, daß es mit Ballaststoffen angereichert ist. Dabei können die Ballaststoffe mit einem Anteil von zumindest 10 Gew.-% enthalten sein.

## Beschreibung

Die Erfindung betrifft ein weiches Fruchtbonbon mit Fruchtanteilen, Zucker, Geliermittel, Säurungsmittel und Aromen.

Weiche Fruchtbonbons der genannten Art sind in vielerlei Ausgestaltungen als sogenannte Fruchtgummis, Weingummis oder in Abhängigkeit von ihrer Formgebung auch als Gummitaler und insbesondere als Gummibärchen bekannt und beliebt. Es hat sich jedoch gezeigt, daß die weichen Fruchtbonbons insbesondere bei übermäßigem Verzehr für den Konsumenten ernährungsphysiologisch bedenklich sind und somit von einigen Personen nicht oder nur in geringem Umfang konsumiert werden können.

Der Erfindung liegt die Aufgabe zugrunde, ein weiches Fruchtbonbon der genannten Art zu schaffen, das ernährungsphysiologisch vorteilhaft ist.

Diese Aufgabe wird erfindungsgemäß bei einem gattungsgemäßen weichen Fruchtbonbon dadurch gelöst, daß es mit Ballaststoffen angereichert ist.

Die Anreicherung mit Ballaststoffen erhöht die Bekömmlichkeit der Fruchtbonbons, da die Ballaststoffe die Darmtätigkeit des Konsumenten anregen, wobei insbesondere eine Mischung aus unterschiedlichen Ballaststoffen, beispielsweise eine Mischung aus löslichen und unlöslichen Ballaststoffen verwendet wird. Dabei ist in bevorzugter Ausgestaltung der Erfindung ein relativ hoher Anteil der Ballaststoffe von zumindest 10 Gew.-% und insbesondere von 12 Gew.-% vorgesehen. Auf diese Weise kann bei Verzehr einer 150g-Packung der erfindungsgemäßen weichen Fruchtbonbons eine Gesamt-Ballaststoffmenge von 150g x 0,12 = 18g aufgenommen werden, was ca. 60% des empfohlenen Tagesbedarfs von 30g an Ballaststoffen entspricht.

Hinsichtlich des Gehaltes an technologisch notwendigen Bestandteilen, d.h. den Zuckern, den höheren Dextrinen, dem Säuerungsmittel Zitronensäure und den Aromen, unterscheiden sich die erfindungsgemäßen weichen Fruchtbonbons nicht wesentlich von den handelsüblichen, bekannten Produkten. Aus Geschmacksgründen sollte jedoch erfindungsgemäß eine Fruchtzubereitung in einer Konzentration von 30 Gew.-% zugegeben werden, was dazu führt, daß der Fruchtgehalt im Endprodukt 15 Gew.-% beträgt.

In bevorzugter Ausgestaltung der Erfindung ist Haferkleie als Ballaststoff in dem weichen Fruchtbonbon enthalten. Die Haferkleie wird vorzugsweise in feinst vermahlener Form mit einem Anteil von 2 bis 6 Gew.-% und insbesondere von 4 Gew.-% zugegeben. Haferkleie ist ein unlöslicher Ballaststoff, der im Darm quillt und damit das Darmvolumen erhöht. Dies führt zu einem lang anhaltenden Sättigungsgefühl und einer Verkürzung der Passagezeit durch eine Anregung der Darmmotorik.

Als weiterer Ballaststoff kann in dem erfindungsgemäßen weichen Fruchtbonbon Oligofructose enthalten sein, bei der es sich um einen löslichen Ballaststoff handelt, den die im Dickdarm des Menschen befindlichen Bifidobakterien als Substrat nutzen können. Die Bifidobakterien werden dadurch in ihrem Wachstum gefördert, wodurch es zu einer guten Besiedelung der Darmwandung mit den Bifidobakterien kommt, was wiederum die Ansiedlung von pathogenen Keimen erschwert.

Die erfindungsgemäßen weichen Fruchtbonbons sollten gelatinefrei sein. Statt dessen kann als Geliermittel Pektin verwendet werden. Pektin ist gleichzeitig ein löslicher Ballaststoff, der erfindungsgemäß mit einem Anteil von zumindest 2 Gew.-% und insbesondere von 2 bis 4 Gew.-% in dem weichen Fruchtbonbon enthalten ist. Pektin quillt im Darm auf und regt somit die Darmperestaltik an, wodurch die Passagezeit verkürzt wird. Durch eine Verkürzung der Passagezeit wird auch die Kontaktzeit der Darmwand mit möglichen toxischen Stoffen verringert. Zudem binden die Ballaststoffe wie Pektin toxische Stoffe und auch Schwermetallionen, so daß deren Resorption vermindert wird. Weiterhin verzögert Pektin als löslicher Ballaststoff die Resorption von Nahrungsbestandteilen im Allgemeinen, wodurch auch der Blutglukosespiegel nur langsam ansteigt, was für Diabetiker von besonderer Bedeutung ist. Pektin hat darüber hinaus den weiteren Vorteil, daß es als löslicher Ballaststoff die Rückresorption von Gallensäuren und Cholesterin vermindert, wodurch der Blutcholesterinspiegel gesenkt wird.

Die erfindungsgemäßen weichen Fruchtbonbons sollten darüber hinaus farbstofffrei und/oder mit Vitaminen angereichert sein. Insbesondere die Anreicherung mit Vitaminen der B-Gruppe ist vorteilhaft, da diese von besonderer Bedeutung bei der Verstoffwechselung von Zuckern sind. Auf diese Weise sind in dem erfindungsgemäßen Fruchtbonbons die zur Verstoffwechselung von Zuckern notwendigen Vitamine bereits enthalten.

Die Beimengung von Ballaststoffen und insbesondere in Kombination mit der Verwendung von Pektin statt Gelatine als Geliermittel führt zu einem weichen Fruchtbonbon, das gut verträglich und leicht verdaulich ist.

## Patentansprüche

1. Weiches Fruchtbonbon mit Fruchtanteilen, Zucker, Geliermittel, Säuerungsmittel und Aromen, **dadurch gekennzeichnet, daß** es mit Ballaststoffen angereichert ist.

2. Weiches Fruchtbonbon nach Anspruch 1, **dadurch gekennzeichnet, daß** die Ballaststoffe mit einem Anteil von zumindest 10 Gew.-% enthalten sind.

3. Weiches Fruchtbonbon nach Anspruch 2, **dadurch gekennzeichnet, daß** die Ballaststoffe mit einem Anteil von 12 Gew.-% enthalten sind.

4. Weiches Fruchtbonbon nach einem der Ansprüche 1 bis 3, **dadurch gekennzeichnet, daß** als Ballaststoff Haferkleie enthalten ist.

5. Weiches Fruchtbonbon nach Anspruch 4, **dadurch gekennzeichnet, daß** die Haferkleie mit einem Anteil von 2 bis 6 Gew.-% und insbesondere von 4 Gew.-% enthalten ist.

6. Weiches Fruchtbonbon nach einem der Ansprüche 1 bis 5, **dadurch gekennzeichnet, daß** als Ballaststoff Oligofructose enthalten ist.

7. Weiches Fruchtbonbon nach einem der Ansprüche 1 bis 6, **dadurch gekennzeichnet, daß** als Geliermittel Pektin verwendet ist.

8. Weiches Fruchtbonbon nach Anspruch 7, **dadurch gekennzeichnet, daß** das Pektin mit einem Anteil von zumindest 2 Gew.-% und insbesondere von 2 bis 4 Gew.-% enthalten ist.

9. Weiches Fruchtbonbon nach einem der Ansprüche 1 bis 8, **dadurch gekennzeichnet, daß** es gelatinefrei ist.

10. Weiches Fruchtbonbon nach einem der Ansprüche 1 bis 9, **dadurch gekennzeichnet, daß** es farbstofffrei ist.

11. Weiches Fruchtbonbon nach einem der Ansprüche 1 bis 10, **dadurch gekennzeichnet, daß** es mit Vitaminen angereichert ist.

12. Weiches Fruchtbonbon nach einem der Ansprüche 1 bis 11, **dadurch gekennzeichnet, daß** der Fruchtgehalt 15 Gew.-% beträgt.
